Europäisches Patentamt

European Patent Office

Office européen des brevets

(19)

(11) Veröffentlichungsnummer: **0 202 433**
**A2**

## (12) EUROPÄISCHE PATENTANMELDUNG

(21) Anmeldenummer: 86104364.4

(51) Int. Cl.⁴: **B29C 45/50** , B29C 45/17

(22) Anmeldetag: 29.03.86

(30) Priorität: 15.04.85 DE 3513412
06.08.85 DE 3528154

(43) Veröffentlichungstag der Anmeldung:
26.11.86 Patentblatt 86/48

(84) Benannte Vertragsstaaten:
AT CH DE FR GB IT LI NL

(71) Anmelder: **Hehl, Karl**
**Arthur-Hehl-Strasse 32**
**D-7298 Lossburg-1(DE)**

(72) Erfinder: **Hehl, Karl**
**Arthur-Hehl-Strasse 32**
**D-7298 Lossburg-1(DE)**

(74) Vertreter: **Mayer, Friedrich, Dr.**
**Patentanwälte Dr. Mayer & Frank Westliche**
**24**
**D-7530 Pforzheim(DE)**

(54) **Kupplungseinrichtung an auswechselbarer Arbeitseinheit einer Kunststoff-Spritzgiessmaschine.**

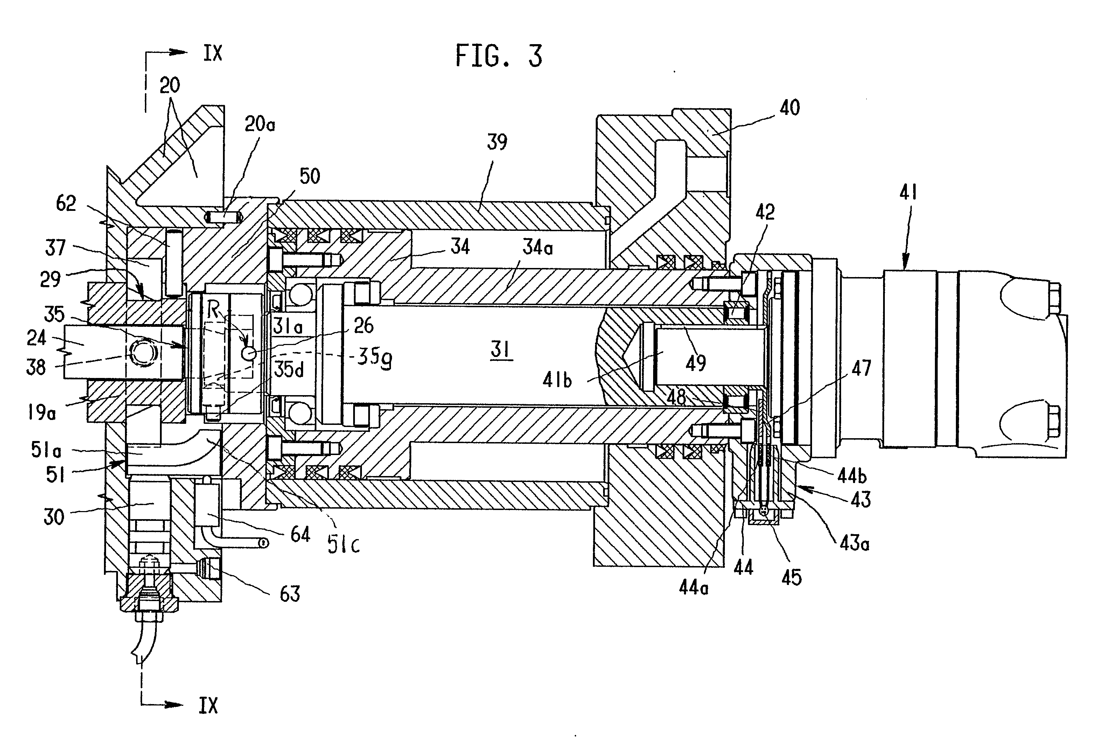

(57) Zur Verbindung einer Förderschnecke (24) mit einer axial und radial antreibenden Spindel (31) greifen diametrale, radial geführte, federbelastete Schieber (35g) in eine Ringnut der Förderschnecke (24) ein. Die Schieber (35g) sind mittels eines Spreizkeiles (35d) aus der Ringnut steuerbar, welcher Spreizkeil (35d) durch einen Radialzylinder (30) zwischen die Schieber (35g) eintreibbar ist. Durch eine Orientierungseinrichtung (Sensor 44a, Gebersegment 48) kann die Rotation der Kupplungseinrichtung bei einer der Arbeitsrichtung des Radialzylinders (30) entsprechenden Stellung der Schieber (35g) sowie einer formschlüssigen Radialkupplung (R) beendet werden. Durch die Verwendbarkeit von radialen Schiebern (35g) und einer formschlüssigen Radialkupplung (R) ergibt sich eine extrem robuste Kupplungseinrichtung (Fig. 3).

FIG. 3

## Kupplungseinrichtung an auswechselbarer Arbeitseinheit einer Kunststoff-Spritzgießmaschine.

Die Erfindung bezieht sich auf eine Kupplungseinrichtung an der automatisch auswechselbaren und quer zur Spritzachse abtransportierbaren Arbeitseinheit (Spritzgießform; Plastifiziereinheit) einer Kunststoff-Spritzgießmaschine zum axialen Kuppeln eines beim Spritzzyklus, also periodisch bewegten Bauteiles der Arbeitseinheit mit seiner in der Spritzachse angeordneten hydraulischen Antriebseinrichtung,

mit diametral zur Spritzachse angeordneten Schiebern, die zum Kuppeln mittels Federn in eine Ringnut des einen Kupplungsteils einsteuerbar und in einem Schiebegehäuse radial geführt sind, das an dem anderen Kupplungsteil befestigt ist,

und mit einem radial führbaren Spreizkeil, der zum Heraussteuern der Schieber aus der Ringnut mittels einer radial liegenden Kolben-Zylinder-Einheit ( Radialzylinder) geringfügig in eine lineare Fuge ( Schieberfuge ) zwischen die Schieber eintreibbar ist.

Bei der Kunststoff-Spritzgießmaschine im obigen Sinne ist die Spritzgießeinheit mittels wenigstens eines hydraulischen Fahrzylinders auf die in einer Formschließeinheit aufgenommenen Spritzgießform auf -bzw. absetzbar.

Eine bekannte Kupplungseinrichtung dieser Art (DE 31 51 859 C2) dient zur lösbaren Verbindung der Spritzgießform (Arbeitseinheit) mit ihrer hydraulischen Antriebseinrichtung. Die Trennbarkeit der Antriebseinrichtung von der Arbeitseinheit ist eine wesentliche Voraussetzung für einen vom Rechner der Kunststoff-Spritzgießmaschine zentral steuerbaren Wechsel der Spritzgießform - (Arbeitseinheit), bei welchem die Arbeitseinheit quer zur Spritzachse abtransportiert bzw. zugeführt wird (Quertransport).

Um einen solchen Quertransport durchführen zu können, ist es erforderlich, das mit der Ringnut versehene Kupplungsteil aus dem Schiebergehäuse des anderen Kupplungsteils axial herauszuziehen und dadurch für den Quertransport freizumachen. Dies geschieht bei der bekannten Anordnung durch einen Axialhub der in der Spritzachse liegenden Antriebseinrichtung, die auf einen entsprechend längeren Hub ausgelegt sein muß. Da die Schieber als radiale Riegel wirken, können extrem große Belastungsmomente schadlos aufgenommen werden.

Es ist auch eine Kupplungseinrichtung bekannt (DE 32 29 223 A1 -Fig. 4), die zum Verbinden der im Plastifizierzylinder rotierenden und axial verschiebbaren Förderschnecke mit einer das Drehmoment liefernden und axial antreibenden Spindel dient. Auch bei dieser Kupplungseinrichtung wird der den Quertransport ermöglichende Axialhub mit Hilfe der in der Spritzachse liegenden Antriebseinrichtung bewirkt. Das Drehmoment der Spindel wird mit Hilfe eines Freilaufs auf den Schaft der Förderschnecke übertragen. Axiale Belastungen werden durch eine radialsymmetrisch aufgebaute, in der Spritzachse angeordnete Axialkupplung aufgenommen, die durch einen gesonderten, koaxialen hydraulischen Antriebszylinder betätigbar ist. Dieser rotiert mit der Kupplungseinrichtung. Die Zufuhr des Druckmediums ist daher mit einem zusätzlichen Aufwand verbunden.

Der Erfindung liegt die Aufgabe zugrunde, eine mit radialen Schiebern arbeitende und daher extrem robuste Kupplungseinrichtung der eingangs genannten Gattung derart weiterzubilden, daß die Förderschnecke mit einer radial und axial antreibenden Spindel bei radialem Formschluß verbindbar ist.

Diese Aufgabe wird erfindungsgemäss dadurch gelöst, daß der Kupplungseinrichtung - (Axialverriegelung) zum Verbinden einer im Plastifizierzylinder rotierbaren und axial verschiebbaren Förderschnecke mit einer radial und axial antreibenden Spindel eine formschlüssige, axial ausrückbare Radialkupplung sowie eine Orientierungseinrichtung zugeordnet sind, durch die die gemein same Rotationsbewegung von Axialverriegelung und Radialkupplung etwa bei einer Soll-Winkelstellung der Schieberfuge beendbar ist, in welcher Soll-Winkelstellung die Schieberfuge parallel zur Arbeitsrichtung des Radialzylinders verläuft.

Bei einer solchen Ausbildung entspricht die beliebig reproduzierbare Soll-Winkelstellung der Schieberfuge einer zwangsläufig mit dieser verwirklichten Soll-Winkelstellung der auf der Seite der Förderschnecke befindlichen Eingriffsprofile der Radialkupplung. Da der Radialzylinder stationär ist, kann dieser bei einer problemlosen Zufuhr des Druckmediums mehrere Antriebsfunktionen übernehmen, die beim Wechsel der Plastifiziereinheit zugleich anfallen (Steuerung sämtlicher Radialschieber der Kupplungseinrichtung sowie zum Beispiel einer Arretiervorrichtung für die axiale Festlegung der Plastifiziereinheit).

Bei einer Weiterbildung entsprechend dem Patentanspruch 2 ist sichergestellt, daß die Schieber der Kupplungseinrichtung beim axialen Einführen der Förderschnecke einer ausgewechselten Plastifiziereinheit mittels der Spreizkeile radial auseinandergespreizt werden können und daß sich die Eingriffsprofile der Kupplungsteile in einer sich entsprechenden, die Einrückung ermöglichenden Radialstellung ( Einrückstellung) befinden. Dabei umfaßt die Orientierungseinrichtung einen induktiven Impulsdrehzahl-Aufnehmer, so daß auch eine Drehzahlmessung möglich ist ("Messen, Steuern, Regeln in der Kunststoffverarbeitung -IKV-Dokumentation", herausgegeben vom Institut für Kunststoffverarbeitung Aachen, Carl Hanser Verlag, München/Wien, S.91-93,99). Bei einer Ausbildung entsprechend Patentanspruch 3 ist eine kürzere Bauweise der Spritzgießeinheit möglich, weil die den Quertransport der Plastifiziereinheit ermöglichende Axialbewegung der Kupplungsteile von Fahrzylindern übernommen wird, die außerhalb der

Spritzachse liegen und sich daher mit der in der Spritzachse liegenden hydraulischen Antriebseinrichtung (Einspritzzylinder ) axial überschneiden können.

Bei einer Ausbildung nach Patentanspruch 5 ergeben sich gute Voraussetzungen für eine rationelle Serienfertigung bei zuverlässiger rückseitiger Zentrierung der Förderschnecke gemäss Patentanspruch 6.

Wird die Soll-Winkelstellung der Schieberfuge und demzufolge auch die Soll-Winkelstellung der spindelseitigen Eingriffsprofile der Radialkupplung durch die Orientierungseinrichtung nur annäherungsweise erreicht, so ist dieses Soll-Winkelstellung durch eine Ausbildung entsprechend den Patentansprüchen 9 und 10 beim axialen Aufeinandertreffen der Kupplungshälften vollends erzwingbar.

Nachstehend wird die Erfindung anhand der Zeichnung an einem Ausführungsbeispiel erläutert. Es zeigen:

Fig. 1 einen Ausschnitt aus der Kunststoff-Spritzgießmaschine, an welcher die Kupplungseinrichtung verwirklicht ist, in Seitenansicht,

Fig. 2 einen Schnitt nach Linie II-II von Fig. 1,

Fig. 2A den in der Symmetrieebene quergeschnittenen Steg des Lagerbügels aus Fig. 2 in vergrößerter Darstellung,

Fig. 3 einen Ausschnitt aus der längsgeschnittenen Spritzgießeinheit der Kunststoff-Spritzgießmaschine in Seitenansicht ( vergrößerte Darstellung),

Fig.4,6 die Axialverriegelung für die Förderschnecke und die Radialkupplung im Vertikalschnitt in gekuppeltem und entkuppelten Zustand,

Fig.5,7 Schnitte nach Linien V-V von Fig.4 und VII-VII von Fig. 6,

Fig.8 einen Schnitt nach Linie VIII-VIII von Fig.6,

Fig.9,10 einen Schnitt nach Linie IX-IX von Fig.3 (Fig.10 Axialkupplung entkuppelt),

Fig.11 einen Schnitt nach Linie IX-IX von Fig.12,

Fig.12 einen Ausschnitt aus Fig.3 im Bereich der Orientierungseinrichtung in vergrößerter Darstellung.

Fig.13,14 ein weiteres Ausführungsbeispiel in einer der Fig. 3 entsprechenden Darstellung gegenüber Fig.13 ist in Fig. 14 die Anordnung um 90° gedreht) und

Fig.16-18 Einzelheiten aus Fig.13 in vergrößerter Darstellung.

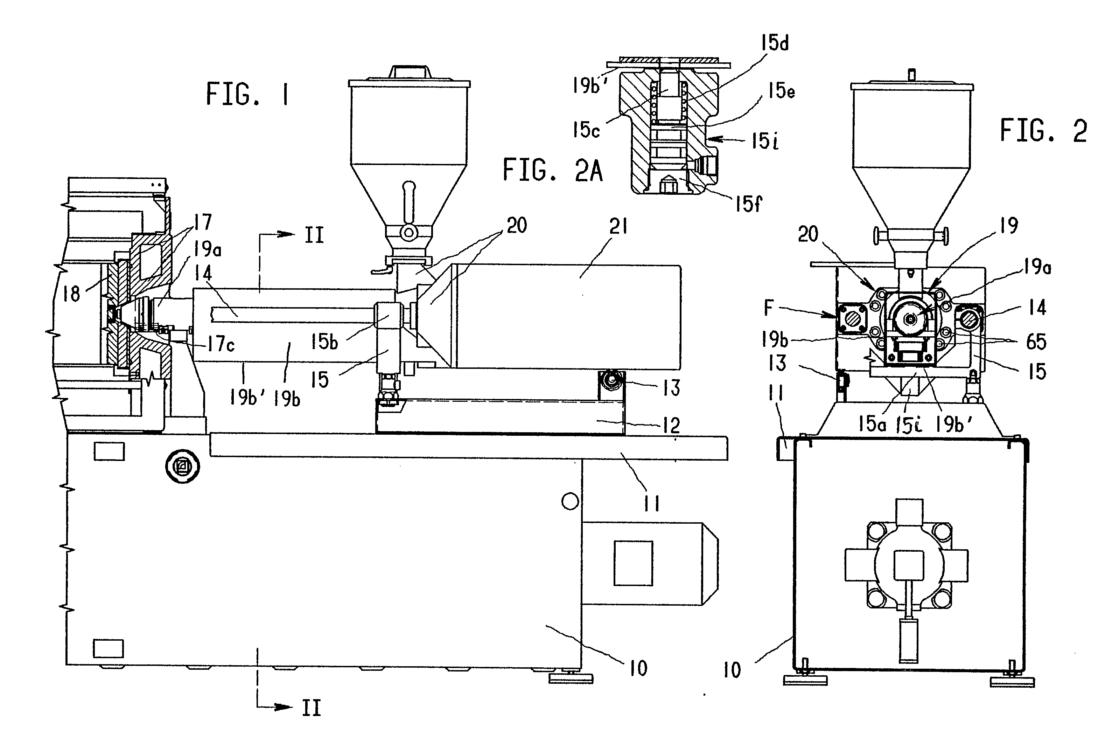

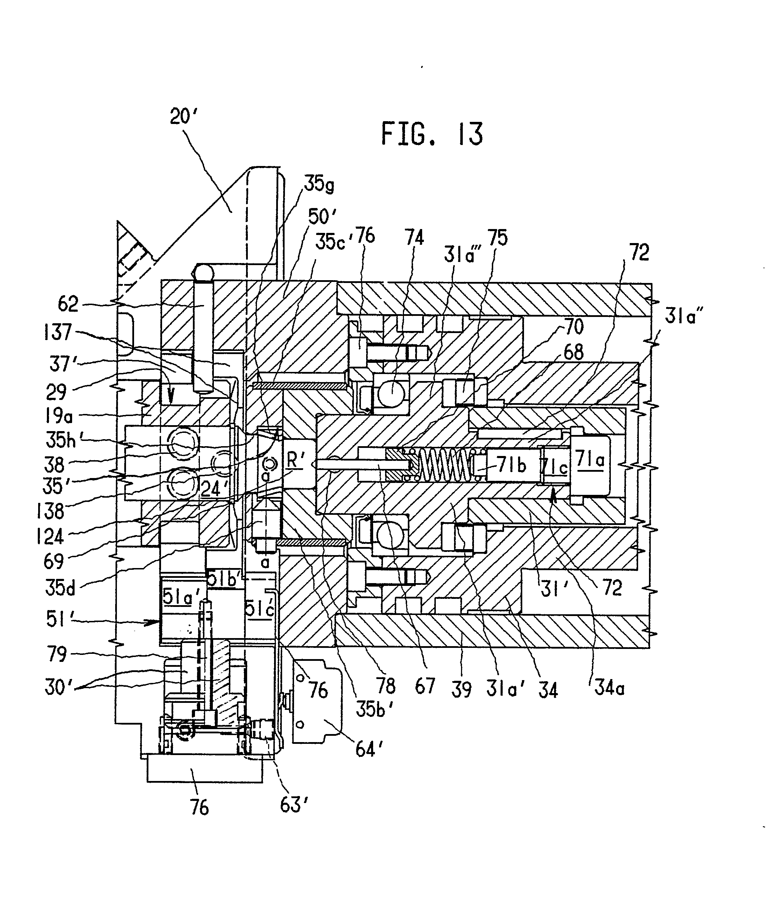

In den Figuren 1-5 ist ein erstes Ausführungsbeispiel, in den Figuren 13-18 ein weiteres Ausführungsbeispiel dargestellt. In beiden Ausführungbeispielen sind gleiche bzw. funktionell vergleichbare Teile mit gleichen bzw. analogen Bezugszeichen versehen (z.Bp. gleicher Plastifizierzylinder 19a in beiden Ausführungsbeispielen;baulich voneinander abweichende, jedoch funktionell entsprechende Förderschnecke 24 ( im ersten) und 24' im (zweiten Ausführungsbeispiel).

Im folgenden wird der für beide Ausführungsbeispiele gemeinsame Aufbau beschrieben.

Die Kupplungseinrichtung ist für eine automatisch auswechselbare Plastifiziereinheit bestimmt und geeignet. Sie umfaßt daher sowohl eine Axialverriegelung für den Plastifizierzylinder 19a als auch eine Axialverriegelung für die Förderschnecke 24,24', die zum Verbinden und Lösen der Förderschnecke 24,24' mit einem in der Spritzachse angeordneten hydraulischen Einspritzzylinder 34,39 - (Fig.3,13,14) dient. Sie umfaßt diametral zur Spritzachse angeordnete Schieber 35g, die zum Kuppeln mittels Federn 35f in eine Ringnut 24a des Schaftes der Förderschnecke 24,24' einsteuerbar sind. Die Schieber 35g sind in einem Schiebergehäuse 35,35' radial geführt, das an der die Förderschnecke 24,24' radial und axial antreibenden Spindel 31,31' befestigt ist. Zum Lösen der Axialkupplung ist ein radial führbarer Speizkeil 35d vorgesehen. Dieser ist zum Heraussteuern der Schieber 35g aus der Ringnut 24a mittels einer radial liegenden Kolben-Zylinder-Einheit ( Radialzylinder 30,30') geringfügig zwischen die Spreiz-Schieber 35 g entreibbar. Zur Übertragung des Drehmomentes von der Spindel 30,30' auf die Förderschnecke 24,24' ist der Axialverriegelung eine formschlüssige, axial ausrückbare Radialkupplung R,R' zugeordnet.

Ferner ist eine Orientierungseinrichtung vorgesehen. Durch die Orientierungseinrichtung ist die gemeinsame Rotationsbewegung der Axialverriegelung (Schieber 35g) und der Radialkupplung R,R' etwa bei einer Soll-Winkelstellung der Schieberfuge 66 beendbar, welche Soll-Winkelstellung der radialen Arbeitsrichtung des Radialzylinders 30,30' entspricht. Die Orientierungseinrichtung umfaßt einen induktiven Impulsdrehzahl-Aufnehmer mit einem auf der Geberscheibe 47 befestigten Gebersegment 48 sowie mit einem stationären Sensor 44a. Letzterer arbeitet mit dem Gebersegment 48 zur Bildung eines Stop-Signals zusammen. Der Sensor 44b des Impulsdrehzahl-Aufnehmers und der Sensor 44a sind in einem Gehäuse 44 aufgenommen, das in einer Ausformung 43a des Verbindungsflansches 43 liegt und in welches die Sensorleitungen 45 rückseitig eintreten. Der das Drehmoment für die Spindel 31,31' liefernde Rotationsmotor 41 ist derart regelbar, daß die für die Plastifizierung des Kunststoffes in der Plastifiziereinheit 19 erforderliche Betriebsdrehzahl auf eine für das Ausrücken der Radialkupplung R,R' günstigere, geringere Entkupplungsdrehzahl von etwa 20-30 Umdrehungen/min. reduzierbar ist. Die Radialkupplung R,R' ist im Gefolge eines Rückhubes der außerhalb der Spritzachse liegender Fahrzylindern F ausrückbar.

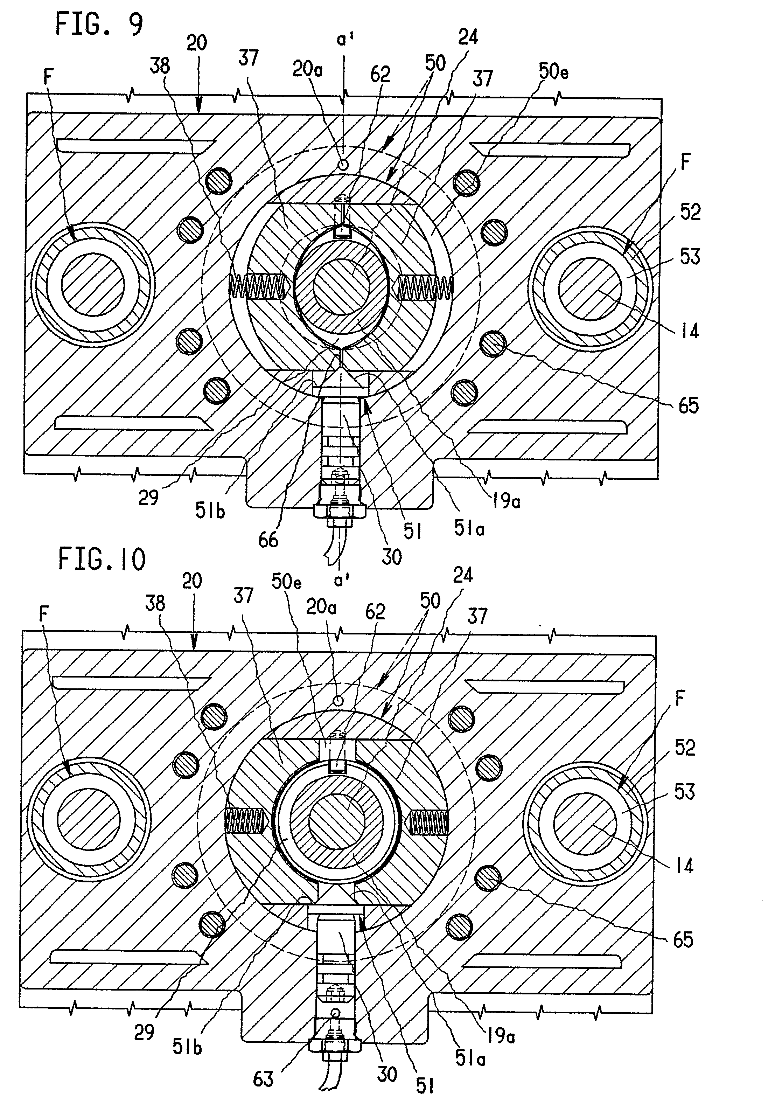

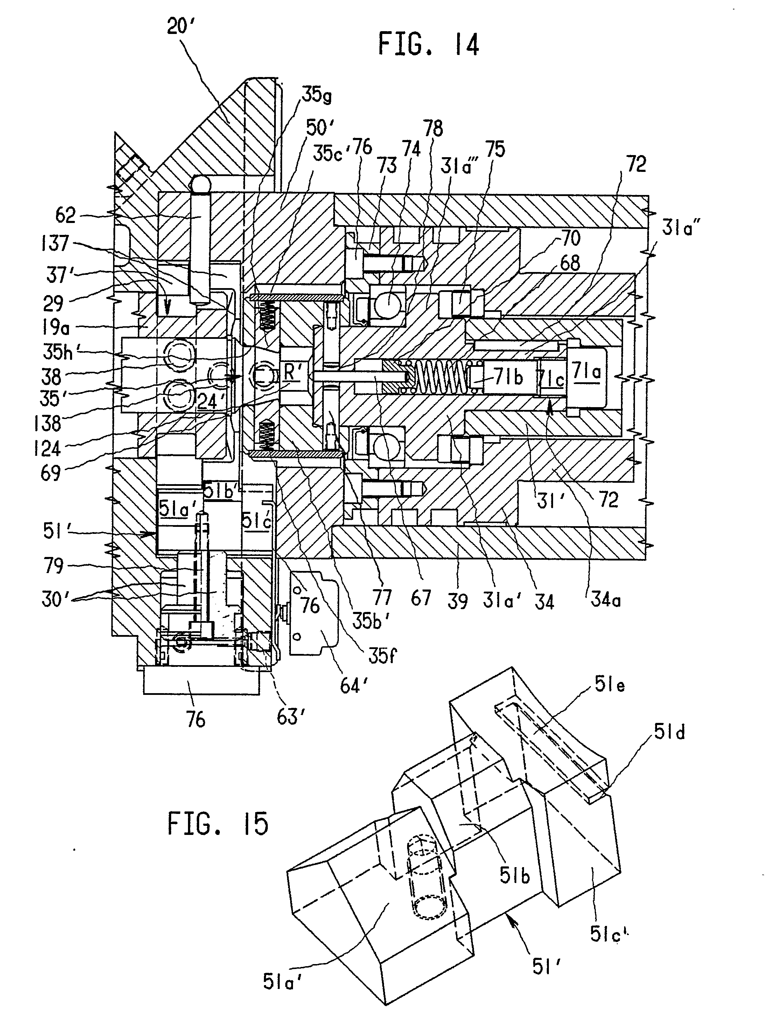

Zu diesem Zweck ist die Spritzeinheit über Trägerbrücken 20,40 auf stationären Säulen 14 axial verschieblich gelagert, die an der Aufspannplatte der Formschließeinheit befestigt sind. Die Kolben 53 ( Fig.9,10) der Fahrzylinder F sitzen auf den Säulen 14 fest auf. Die eigentlichen Zylinder 52 der Fahrzylinder F und der eigentliche Zylinder 39 des Einspritzzylinders 34,39 bilden mit den Trägerbrücken 20,40 eine starre, auf den Säulen 14 verschiebliche Einheit. Der Kolben 34 des Einspritzzylinders 34,39 und dessen Kolbenstange 34a, 34' sind von der Spindel 31,31' durchsetzt, welche vorne in einen Kupplungsabschnitt 31a ausläuft ( erstes Ausführungsbeispiel) oder einen Anschlußkopf 31a' aufweist. Die Spindel 31,31' ist mit der Antriebswelle 41b des Rotationsmotors 41 mittels Mitnehmer 49 drehfest verbunden. Der Rotationsmotor 41 ist mittels Verbindungsflansch 43 an der drehgesicherten Kolbenstange 34a, 34a' befestigt. Die Spindel 31,31' ist über einen Freilauf 42 an der Kolbenstange 34a,34a' abgestützt. Die Spindel 31,31' ist also drehbar im Kolben 34 bzw. in der Kolbenstange 34a,34' gelagert. Ein Radialflansch der Spindel 31,31' stellt über Drucklager 74,75 in Fig. 13,14 eine Verbindung mit dem Kolben 34 für eine axiale Mitnahme beim Einspritzhub her. Die teilweise von einer Schutzabdeckung 21 umschlossene Spritzgießeinheit ist auf Stützrollen 13 eines Stützlagers 12 des mit Abdeckung 11 versehenen quaderförmigen Maschinenfußes 1o abgestützt. Wie aus Fig. 2 (links im aufgeschnittenen Bereich) erkennbar, liegt dabei die Spritzgießeinheit über die Abdeckung 21 auf den stationären Stützrollen 13 auf und rollt daher beim Absetzen oder Aufsetzen auf den Stützrollen. Die Säulen 14 sind mittels Klemmmuffen 15b über einen Lagerbügel 15 auf dem Stützlager 12 abgestützt.

Wie aus den Figuren 1 und 2 ersichtlich, ist die den Plastifizierzylinder 19a und die Förderschnecke 24; 24' umfassende Plastifiziereinheit 19 von einem Blechmantel 19b umschlossen. Dieser weist ein rechteckiges Querschnittsprofil auf und hat daher eine plane Stellfläche 19b'. Diese Stellfläche verleiht der auf einem horizontalen Steg 15a des Lagerbügels 15 abgestützten Plastifiziereinheit 19 ein stabiles Gleichgewicht, wobei der von der Spritzgießform 18 abgesetzte Plastifizierzylinder 19a auf zwei parallel und symmetrisch zur Spritzachse angeordneten Lagerstiften 17c des stationären Formträgers 17 zentrierend abgestützt ist.

Aus Fig. 2A wird in Verbindung mit Fig. 2 erkennbar, daß im horizontalen Steg 15a des Lagerbügels 15 eine Kolben-Zylinder-Einheit - (Arretierzylinder 15i) mit rückseitigem Zylinderdeckel 15 angeordnet ist, dessen mit Rückstellfeder 15d rückstellbarer Kolben 15e in einen Arretierstift 15c ausläuft. Der Arretierstift 15c kann durch Beaufschlagung des Kolbens 15e in ein Loch der Stellfläche 19b zur axialen Arretierung der auf dem Steg 15a abgestellten Plastifiziereinheit 19 eingedrückt werden. In arretierter Position befindet sich die Plastifiziereinheit 19 in einer axialen Stellung, welche für die Verriegelung von Plastifizierzylinder 19a und Förderschnecke 24, 24' geeignet ist.

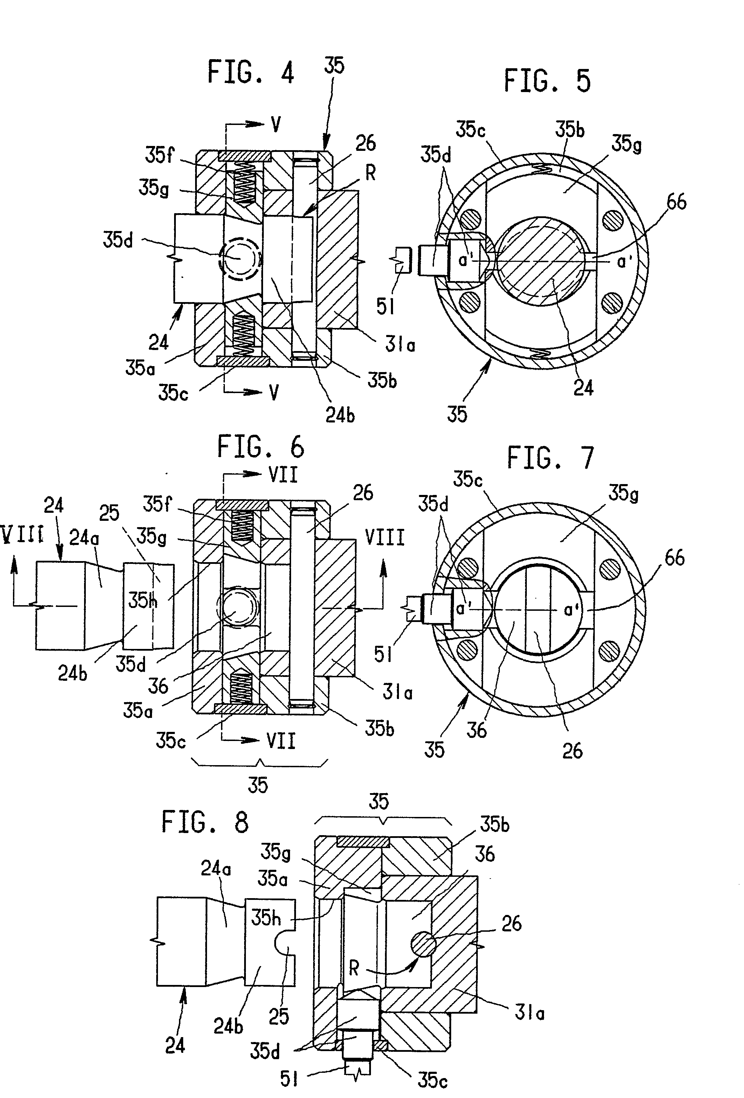

Die Axialverriegelung für die Förderschnecke 24, 24' umfaßt einen fest mit der rotierbaren Spindel 31, 31' verbundenen koaxialen Mitnehmerring 35b, 35b'. Sie weist ferner einen rotationssymmetrischen, an der Stirnseite dieses Mitnehmerringes anliegenden Führungskörper 35a, 35a' auf. Mitnehmerring 35b, 35b' und Führungskörper 35a, 35a' sind von einer Zentrierhülse 35c, 35c' satt umschlossen. Diametrale Führungsbahnen für die Schieber 35g sind im Führungskörper 35a, 35a' ausgespart Letzterer weist einen radialen Führungskanal für den rotationssymmetrischen Spreizkeil 35d auf, der in diesem Kanal gefangen ist und mit dem Führungskörper 35a, 35a' rotiert. Der Schaft der Förderschnecke 24, 24' ist von einer Ringschulter 35h (Fig. 6, 8) bzw. 35h' (Fig. 13,14) des Führungskörpers 35a, 35a' umschlossen.

Zur axialen Verriegelung des Plastifizierzylinders 19a; 19a' sind radial geführte, diametral angeordnete und rückseitig durch Federn 38, 138 belastete Schieber 37, 37', 137 vorgesehen. Diese sind ebenfalls vom Radialzylinder 30 (Fig. 3, 9, 10) bzw. 30' (Fig. 13,14) mittels eines Spreizkeiles 51, 51' aus Kupplungsposition führbar. Dieser Spreizkeil erstreckt sich in axialer Richtung mit einem Antriebsteil 51c in die Rotationsebene a-a (Fig. 13) des Spreizkeiles 35d. Die Schieber 37; 37'; 137 für den Plastifizierzylinder 19a und die Schieber 35g für die Förderschnecke 24, 24' sowie die Radialkupplung R, R'; sind in einem Zentrierblock 20, 50; 20', 50' angeordnet. Dieser ist dadurch gebildet, daß in einer zur Spritzachse konzentrischen Sacklochbohrung der Trägerbrücke 20, 20' ein etwa rotationssymmetrischer Zentrierkörper 50, 50' axial eingefügt ist. Trägerbrücke und Zentrierkörper sind durch einen Sicherungsbolzen 20a bzw. einen Stift 62, 62' miteinander drehfest verbunden. Die Trägerbrücken 20; 20' und 40 sowie der Zentrierkörper 50, 50' sind durch Spannbolzen 65 axial miteinander verspannt. Der Spreizkeil 51; 51' ist in einem radialen Schacht des Zentrierkörpers 50; 50' gelagert.

Der jeweilige Betriebszustand der Axialverriegelungen für Plastifizierzylinder und Förderschnecke ist mit Hilfe von Schaltern 64; 64' kontrollierbar, die durch die Bewegung des Spreizkeiles 51; 51' betätigt werden.

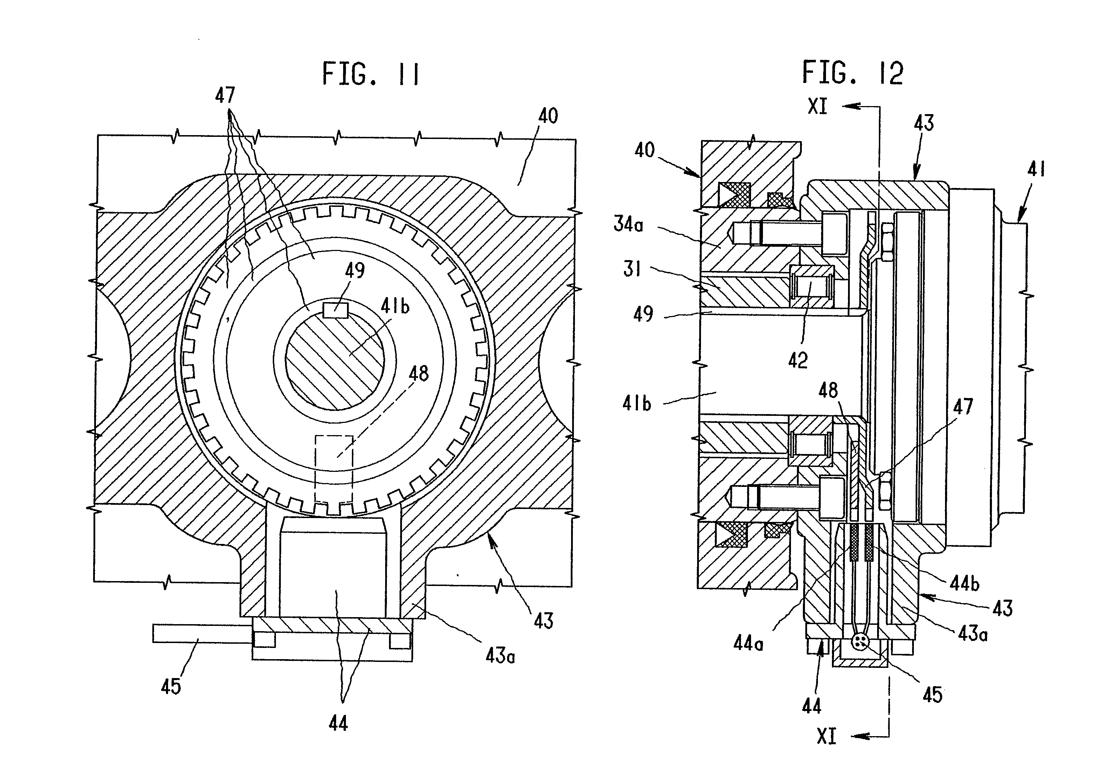

Mit Bezug auf die Axialverriegelung (Riegel 35g) und die Radialkupplung (R; R') umfaßt die Kupplungseinrichtung zwei mit Hilfe der Fahrzylinder F relativ axial zueinander bewegbare Kupplungsteile. Der auf Seite der Förderschnecke 24; 24' und an dieser verwirklichte Kupplungsteil umfaßt die Ringnut 24a und die Eingriffsprofile für die Radialkupplung (im Beispiel der Fig. 1-12 die Radialnut 25 und im Beispiel der Fig. 13-18 die Mitnehmerflächen 124a). Das andere, mit der Spindel 31, 31' fest verbundene Kupplungsteil umfaßt das Schiebergehäuse 35, 35' mit den Schiebern 35g und die Eingriffsprofile für die Radialkupplung R; R' (im Beispiel der Fig. 1-12 den Mitnehmerstift 26 und im Falle des Beispiels der Fig. 13-18 die Mitnehmerflächen 35m). Ist die Plastifiziereinheit 19 auf dem Steg 15a des Lagerbügels 15 axial arretiert und somit für die Verriegelung vorbereitet, so ist auch das Kupplungsteil auf Seiten der Förderschnecke somit axial festgelegt. Das andere Kupplungsteil kann nun zusammen mit der restlichen Spritzgießeinheit mit Hilfe der Fahrzylinder F auf das andere Kupplungsteil zur Verriegelung aufgefahren werden und bei Entriegelung dementsprechend abgesetzt werden. Bei maximaler gegenseitiger Entfernung der Kupplungshälften ist ein Transport (Quertransport) der Plastifiziereinheit 19 quer zur Spritzachse möglich.

Zwischen dem Ausführungsbeispiel der Fig. 1-12 und dem Ausführungsbeispiel der Fig. 13-18 bestehen folgende Unterschiede:

Im erstgenannten Ausführungsbeispiel sind die Eingriffsprofile der Radialkupplung R einerseits durch eine Radialnut 25 in der Stirnseite des Schaftes der Förderschnecke 24 und andererseits durch einen Mitnehmerstift 16 gebildet. Der radiale, durch die Spritzaches gehende Mitnehmerstift 16 verbindet zugleich den Mitnehmerring 35b drehfest mit dem Kupplungsabschnitt 31a der Spindel 31. Der Kolben des Radialzylinders 30 liegt unmittelbar am Spreizkeil 51 an, der unmittelbar auf die Kontrollschalter 64 einwirkt. Die verriegelte Förderschnecke 24 ist rückseitig dadurch zentriert, daß ihr Endabschnitt ( Fig. 4,6,8) in eine Ausnehmung 36 des Kupplungsabschnittes 31a eintaucht. Zur Verriegelung des Plastifizierzylinders 19a sind zwei diametrale, in eine Ringnut 29 des Plastifizierzylinders 19a eingreifende Schieber 37 vorgesehen.

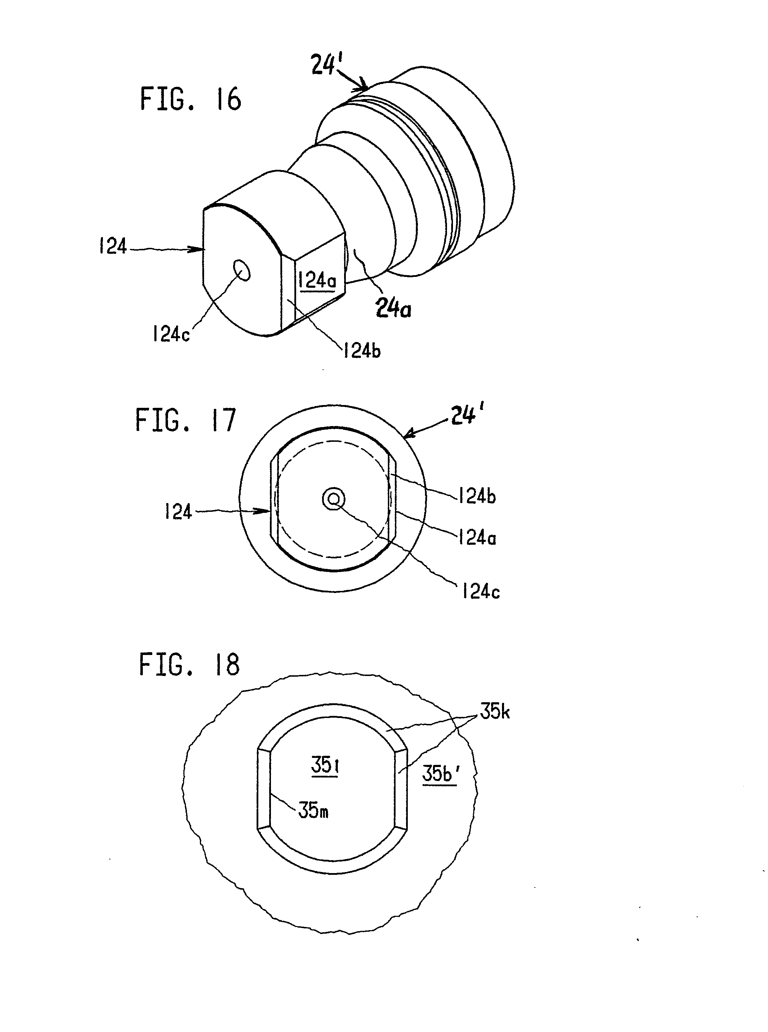

Im Ausführungsbeispiel der Figuren 13-18 sind die Eingriffsprofile der Radialkupplung R' durch plane Mitnehmerflächen 124a am Endabschnitt 124 der Förderschnecke 24' einerseits und durch korrespondierende Mitnehmerflächen 35m in einer Ausnehmung 35i des Mitnehmerringes 35b gebildet. Wie aus den Figuren 16, 17 ersichtlich, gehen die Mitnehmerflächen 124a über Schrägflächen 124b in die senkrecht zu den Mitnehmerflächen 124a stehende Stirnfläche der Förderschnecke 24' über. Die korrespondierenden Mitnehmerflächen 35m, welche die Ausnehmung 35i im Mitnehmerring 35b' begrenzen, gehen in gleicher Weise über Schrägflächen 35k in die senkrecht zu den Mitnehmerflächen 35m stehende Stirnfläche dieses Mitnehmerringes 35b' über. Die genannten Schrägflächen 124b und 35k sind derartig gestaltet und angeordnet, daß beim axialen Aufeinandertreffen der Schrägflächen 124b, 35k beim Einrücken der Radialkupplung R' durch relativ Drehung der Eingriffsprofile eine Justierung auf die Einrückstellung erfolgt, welche mit der Soll-Winkelstellung der Schieberfuge 66 (Fig. 5,7) korrespondiert.

Zur Axialverriegelung des Plastifizierzylinders 19a' sind außer den in eine Ringnut 29 eingreifenden Schiebern 37' weitere Schieber 137 vorgesehen, welche den Plastifizierzylinder 19a hintergreifen und in einer anderen radialen Ebene angeordnet sind. Demzufolge umfaßt der Spreizkeil 51' außer dem Antriebsteil 51c für den Spreizkeil 35d Schrägflächen 51a' und 51b' zum Steuern der in die Ringnut 29 eingreifenden Riegel und zum Steuern der hintergreifenden Riegel 137. Der mit rückseitigem Zylinderdeckel 76 versehene Radialzylinder 30' ist mit Hilfe eines Befestigungsbolzens 79 fest mit dem Spreizkeil 51' verschraubt. Der Spreizkeil 51' steuert die Kontrollschalter 64' über eine Schaltleiste 76, welche in einer Nut 51d des Antriebsteils 51c verankert ist. Die Spindel 31' ist über einen Anschlußkopf 31a' mit dem Mitnehmerring 35b' mittels radialer Mitnehmerbolzen 77 - (Fig.14) drehfest verbunden. Im Anschlußkopf 31a' ist ein Ausstoßerstift 67 koaxial und axial verschieblich angeordnet. Dieser Ausstoßerstift 67 taucht mit einer Zentrierspitze in eine korrespondierende Zentrierausnehmung 124c (Fig. 17) der Förderschnecke 241 zur Zentrierung ein. Dabei ist der Ausstoßerstift 67 rückseitig von einer Schraubenfeder 68 belastet, die an einer zentrierenden Lagerkappe 70 des Ausstoßerstiftes 67 anliegt und rückseitig an einem Bolzen 71 mit Zentrieransatz 71b widergelagert ist. Der Bolzen 71 steht mittels Gewindeabschnitt 71c mit einem Axialflansch 31a" des Anschlußkopfes 31a' im Gewindeeingriff und ist dadurch an diesem axial abgestützt. Im übrigen liegt der Bolzen 71 mit einem Kopf 71a am Axialflansch 31a" an. Durch die Verwendung unterschiedlich langer Bolzen 71 kann der Schraubenfeder 68 eine unterschiedliche Vorspannung verliehen werden. Der Anschlußkopf 31a' ist über einen Radialflansch 31a"' für eine axiale Mitnahme mit dem Kolben 34 verbunden, der über Drucklager 74, 75 an radialen Schultern dieses Kolbens 34 anliegt.

Die Axialbewegung der Förderschnecke 24' ist in Einspritzrichtung mittels eines am Plastifizierzylinder 19a anliegenden Anschlages in einer vordersten Stellung (Frontstellung) begrenzt. Der Anschlag ist durch einen Segerring 69 gebildet, der wie aus den Fign. 13, 14 ersichtlich, in einer Ringnut der Förderschnecke 24' hälftig aufgenommen ist und bei Frontstellung der Förderschnecke 24' mit seiner radial überstehenden Hälfte am Plastifizierzylinder 19a anliegt. Wird das spindelseitige Kupplungsteil (Schiebergehäuse 35; 35') mit Riegel 35g sowie mit den Eingriffsprofilen für die Radialkupplung (R; R') durch einen Axialhub (Ausrückhub) vom anderen Kupplungsteil (an der Förderschnecke 24; 24') zwecks Entriegelung und Freisetzung der Plastifiziereinheit 19 für einen Quertransport axial abgesetzt, so wird die Förderschnecke 24' mittels des Ausstoßerstiftes 67 in Frontstellung gehalten.

Der mit dem Führungskörper 35a' rotierende Spreizkeil 35d ist über einen Zentriwinkel von wenigstens 5°, vorzugsweise über einen Zentriwinkel von mehr als 10° von einer konkaven Arbeitsfläche 51e des Antriebsteiles 51c des Spreizkeiles 51' beaufschlagbar. Dies ist dadurch sichergestellt, daß dieses Antriebsteil 51c sich über einen entsprechend großen Zentriwinkel erstreckt. Auf diese Weise ist eine Entriegelung der Förderschnecke auch dann gewährleistet, wenn die Soll-Winkelstellung der Schieberfuge 66 von der Orientierungseinrichtung nur annäherungsweise erreicht wird.

Der Spreizkeil 51' wirkt über eine in der Nut 51d des Antriebsteils 51c' verankerte Schaltleiste 76 auf die Kontrollschalter 64' ein, wobei sowohl die Verriegelungsposition als auch die Entriegelungsposition ein Kontroll-Signal erzeugt.

Bei der beispielsweise beschriebenen Kupplungseinrichtung kann, ausgehend vom normalen Spritzbetrieb, das Programm des den Wechsel der Plastifiziereinheit 19 steuernden Rechners folgende Schritte vorsehen:

Zunächst wird der Rotationsmotor 41 von der Betriebsdrehzahl auf die Entriegelungsdrehzahl heruntergeregelt. Danach wird in der Orientierungseinrichtung das den Stromkreis des Rotationsmotors 41 trennende Stop-Signal gebildet. Sodann wird durch einen Radialhub des Radialzylinders 30; 30' über die Spreizkeile 51; 51'; 35d sämtliche Schieber 37; 37', 137; 35g aus ihrer Verriegelungsposition gesteuert und gleichzeitig die Plastifiziereinheit 19 mit Hilfe des Arretierzylinders 15i axial festgelegt. Danach wird die Rest-Spritzgießeinheit mit ihrem zugehörigen Kupplungsteil (ohne axial festgelegte Plastifiziereinheit 19 mit zugehörigem Kupplungsteil) durch einen Rückwärtshub der Fahrzylinder F axial so weit von der Plastifiziereinheit 19 abgesetzt, daß diese für den Quertransport frei ist. Dabei wird das rückwärtige Ende des Plastifizierzylinders 19a aus dem Zentrierblock 20, 50; 20', 50' befreit. Sodann wird die Plastifiziereinheit 10 abtransportiert. In dieser weisen die Eingriffsprofile der Radialkupplung R, R' der Förderschnecke 24, 24', wenigstens annäherungsweise eine Soll-Winkelstellung auf, welche mit der Soll-Winkelstellung der Eingriffsprofile und der Schieberfuge 66 im spindelseitigen Kupplungsteil korrespondiert. In dieser annäherungsweisen Soll-Winkelstellung verbleibt die Förderschnecke 24, 24' im Depot und beim Transport, bleibt also für den weiteren Einsatz der Plastifiziereinheit 19 erhalten. Diese 'Konservierung' der Soll-Winkelstellung der Förderschnecke ist auf Grund des im Plastifizierzy-linder verbliebenen und erstarrten Kunststoffmate-rials ohnehin, aber auch dann sichergestellt, wenn vor Beginn des Wechsels der Plastifizierzylinder nicht 'leergespritzt' worden ist.

Die vom Depot kommende, für den weiteren Einsatz vorgesehene Plastifiziereinheit mit Stellfläche 19b' wird rückseitig auf dem Steg 15a des Lagerbügels 15 in stabiler Lage und unter düsenseitiger Abstützung an den Lagerstiften 17c abgestellt. Sofern sich die Schieber 37; 37', 137; 35g nicht bereits in Entriegelungsstellung befinden, werden diese durch einen Hub des Radialzylinders 30, 30' in Entriegelungsposition überführt. Zugleich wird die Plastifiziereinheit 19 mit Hilfe des Arretier-zylinders 51i axial festgelegt, dessen Zylinderkam-mer mit der Zylinderkammer des Radialzylinders kommuniziert. Danach wird die maximal abgesetzte (Rest)-Spritzgießeinheit durch einen Vorwärtshub der Fahrzylinder F in eine axiale Position gemäß den Fign. 3; 13, 14 gefahren, in welcher die Radialkupplung R; R' eingerückt ist und die Förderschnecke sich in Frontstellung befindet. Beim Einrücken der Radialkupplung R, R' erzwingen die Schrägflächen 124b, 35k eine geringfügige relative Drehbewegung der Kupplungsteile und damit eine Einjustierung der annäherungsweisen Soll-Winkelstellung auf die exakte Soll-Winkelstellung. Sodann wird der Druck vom Druckmedium des Radialzylinders genommen, so daß die Schieber 37; 37', 137; 35g durch die Federn 38, 138, 35f in Verriegelungsposition überführt werden. Gleichzeitig gibt der Arretierzylinder 35i den Plastifizierzylinder für eine axiale Bewegung frei, indem der Arretierstift 15c mit Hilfe der Rückstellfeder 15d aus dem Loch der Stellfläche 19b ausgedrückt wird.

In den zeichnerisch dargestellten Ausführungsbeispielen fällt die Soll-Winkelstellung mit der vertikalen Symmetrieebene a'-a' (Fig. 5,7,9) des Systems zusammen.

**Ansprüche**

1. Kupplungseinrichtung an der automatisch auswechselbaren und quer zur Spritzachse abtranspor-tierbaren Arbeitseinheit (Spritzgießform; Plastifizie-reinheit) einer Kunststoff-Spritzgießmaschine zum axialen Kuppeln eines beim Spritzzyklus, also periodisch bewegten Bauteiles der Arbeitseinheit mit seiner in der Spritzachse angeordneten hydraulischen Antriebseinrichtung,

mit diametral zur Spritzachse angeordneten Schieber, die zum Kuppeln mittels Federn in eine Ringnut des einen Kupplungsteils einsteuerbar und in einem Schiebegehäuse radial geführt sind, das an dem anderen Kupplungsteil befestigt ist,

und mit einem radial führbaren Spreizkeil, der zum Heraussteuern der Schieber aus der Ringnut mittels einer radial liegenden Kolben-Zylinder-Einheit (Radialzylinder) geringfügig in eine lineare Fuge - (Schieberfuge) zwischen die Schieber eintreibbar ist,

dadurch gekennzeichnet, daß der Kupplungsein-richtung (Axialverriegelung) zum Verbinden einer im Plastifizierzylinder (19a) rotierbaren und axial verschiebbaren Förderschnecke (24 in Fig. 4-10; 24' in Fig. 13,14) mit einer radial und axial antreibenden Spindel (31; 31') eine formschlüssige, axial ausrückbare Radialkupplung (R;R') sowie eine Orientierungseinrichtung (Sensor 44a, Gebersegment 48) zugeordnet sind, durch die die gemeinsame Rotationsbewegung von Axialverriegelung (Riegel 35g) und Radialkupplung (R;R') etwa bei einer Soll-Winkelstellung der Schieberfuge (66 in Fig. 5,7) beendbar ist, in welcher Soll-Winkelstellung die Schieberfuge (66) parallel zur Arbeitsrichtung des Radialzylinders (30,30') verläuft.

2. Kupplungseinrichtung nach Patentanspruch 1, dadurch gekennzeichnet, daß die Orientierungsein-richtung einen induktiven Impulsdrehzahl-Aufneh-mer umfaßt, auf dessen Geberscheibe ein Gebersegment (48) befestigt ist, und daß ein stationärer Sensor (44a) vorgesehen ist, der mit dem Gebersegment (48) zur Bildung eines Stopsignals zusammenarbeitet, wobei der das Drehmoment liefernde Rotationsmotor (41) derart regelbar ist, daß die für die Plastifizierung des Kunststoffs erforderliche Betriebsdrehzahl auf eine für das Ausrücken der Radialkupplung (R in Fig. 4,5; R' in Fig. 13,14) günstigere, geringere Entkupplungsdrehzahl von etwa 20-30 Umdrehungen/min. reduzierbar ist.

3. Kupplungseinrichtung nach Patentanspruch 1 oder 2, dadurch gekennzeichnet, daß die Kupplungsteile mit Hilfe des außerhalb der Spritzachse angeordneten Fahrzylinders (F) derart relativ zueinander axial bewegbar sind (Axialbewegung), daß bei maximaler gegenseitiger Entfernung der Kupplungshälften ein Transport (Quertransport ) der Plastifiziereinheit (19) quer zur Spritzachse möglich ist.

4. Kupplungseinrichtung nach einem der Patentansprüche 1-3, dadurch gekennzeichnet, daß sie zur axialen Verriegelung des Plastifizierzylinders (19a) weitere, radial geführte, diametral angeordnete und federbelastete Schieber (37 in Fig. 3; 37',137 in Fig. 13,14) umfaßt, die unmittelbar am Plastifizierzylinder (19a) angreifen und vom Radialzylinder (30 in Fig. 3,9,10; 30' in Fig. 13,14) mittels eines Spreizkeiles (51; 51') aus Kupplungsposition heraussteuerbar sind, welcher Spreizkeil (51; 51') sich mit einem Antriebsteil (51c; 51c') in die Rotationsebene (a-a) des Spreizkeils (35d) der Axialverriegelung (Schieber 35g) für die Förderschnecke - (24; 24') erstreckt.

5. Kupplungseinrichtung nach einem der vorhergehenden Patentansprüche, dadurch gekennzeichnet, daß die Axialverriegelung (Schieber 35g) einen fest mit der Spindel (31; 31') verbundenen koaxialen Mitnehmerring (35b; 35b'), einen rotationssymmetrischen, am Mitnehmerring (35b; 35b') anliegenden Führungskörper (35a; 35a') und eine diesen Führungskörper sowie den Mitnehmerring (35b; 35b') satt umschließende Zentrierhülse - (35c; 35c') umfaßt, wobei diametrale Führungsbahnen für die Schieber (35g) im Führungskörper(35a; 35a') ausgespart sind, der den rotationssymmetrischen Spreizkeil (35d) in einem radialen Führungskanal aufnimmt.

6. Kupplungseinrichtung nach einem der vorhergehenden Patentansprüche, dadurch gekennzeichnet, daß die Förderschnecke (24; 24') an der Spindel - (30, 30') zentrierbar ist.

7. Kupplungseinrichtung nach einem der Patentansprüche 4-6, dadurch gekennzeichnet, daß sie in einem den Plastifizierzylinder (19a) in einer zentralen Bohrung axial verschieblich aufnehmenden Zentrierblock (20,50,20', 50') angeordnet ist, der einen radialen Schacht für den die Schieber (37; 37',137) des Plastifizierzylinders (19a) steuernden Spreizkeil (51; 51') umfaßt.

8. Kupplungseinrichtung nach einem der vorhergehenden Patentansprüche, dadurch gekennzeichnet, daß die Eingriffsprofile der Radialkupplung (R) einerseits durch eine Radialnut (25) im Schaft der Förderschnecke (24) und andererseits durch einem Mitnehmerstift (16) gebildet sind, der die Spindel - (31) drehfest mit dem Mitnehmerring (35b) verbindet ( Ausführungsbeispiel der Figuren 1-9).

9. Kupplungseinrichtung nach einem der Patentansprüche 1-7, dadurch gekennzeichnet, daß die Eingriffsprofile der Radialkupplung (R') durch plane Mitnehmerflächen (124a) am Endabschnitt (124) der Förderschnecke (24') und durch korrespondierende Mitnehmerflächen (35m) in einer Ausnehmung (35i) des Mitnehmerringes (35b') gebildet sind ( Ausführungsbeispiel der Figuren 13-18).

10. Kupplungseinrichtung nach Patentanspruch 9, dadurch gekennzeichnet, daß die Mitnehmerflächen (124a) über Schrägflächen (124b) derart in die Stirnfläche der Förderschnecke (24' ) und die korrespondierenden Mitnehmerflächen (35m) über Schrägflächen (35k) derart in die Stirnflächen des Mitnehmerringes (35b') übergehen, daß beim axialen Aufeinandertreffen der Schrägflächen - (124b,35k) beim Einrücken der Radialkupplung (R) eine radiale Einjustierung der Eingriffsprofile in Einrückstellung erfolgt.

11. Kupplungseinrichtung nach einem der vorhergehenden Patentansprüche 4-10, dadurch gekennzeichnet, daß die jeweilige Betriebsposition der in die Förderschnecke (24,24') eingreifenden Schieber (35g) und der am Plastifizierzylinder (19a) angreifenden Schieber (37; 37',137) mittels durch die Bewegung des Spreizkeiles (51; 51') betätigbarer Schalter (64; 64') kontrollierbar ist.

12. Kupplungseinrichtung nach einem der vorhergehenden Patentansprüche, dadurch gekennzeichnet, daß die mit einer horizontalen Stellfläche (19b' in Fig. 1,2) versehene Plastifiziereinheit (19) auf einem horizontalen Lager (Steg 15a in Fig. 2) der Kunststoff-Spritzgießmaschine in drehgesicherter Position abstellbar und dort mittels einer Arretiervorrichtung (15i) und einer für die Betätigung der Kupplung geeigneten und bestimmten axialen Stellung arretierbar ist.

13. Kupplungseinrichtung nach einem der vorhergehenden Patentansprüche 3-12, dadurch gekennzeichnet, daß die Axialbewegung der Förderschnecke ( 24') in Einspritzrichtung mittels eines am Plastifizierzylinder anliegenden Anschlages - (Seegering 69) in einer vordersten Stellung - (Frontstellung) begrenzt ist und daß die Förderschnecke (24; 24') beim Ausrückhub mittels eines koaxialen, federbelasteten und an der Spindel (31; 31') abgestützten Ausstoßerstiftes (67) in Frontstellung gehalten ist (Fig. 13,14).

14. Kupplungseinrichtung nach einem der vorhergehenden Patentansprüche 5 bis 13, dadurch gekennzeichnet, daß der mit Führungskörper (35a; 35a') rotierende Spreizkeil (35d) über einen Zentriwinkel von wenigstens 5° von der konkaven Arbeitsfläche (51e) des Antriebsteiles (51c) des Spreizkeiles (51') beaufschlagbar ist.

FIG. 1

FIG. 2

FIG. 2A

# FIG. 3

0 202 433

FIG. 4

FIG. 5

FIG. 6

FIG. 7

FIG. 8

0 202 433

FIG. 9

FIG. 10

# FIG. 11

47  40

49  41b  48  43  45  44  43a

# FIG. 12

XI  43  41

40  34a  31  49  42  41b  48  47  44b  43  43a  44  45

XI

0 202 433

# FIG. 13

FIG. 14

FIG. 15

FIG. 16

124

124c

24'

124a

24a

124b

FIG. 17

24'

124

124b

124a

124c

FIG. 18

35k

35l

35b'

35m